Europäisches Patentamt

European Patent Office

Office européen des brevets

(11) Publication number: **0 230 697**
**A1**

## EUROPEAN PATENT APPLICATION

(21) Application number: 86202383.5

(22) Date of filing: 24.12.86

(51) Int. Cl.4: **B60J 1/17** , E05F 11/48

(30) Priority: 10.01.86 IT 2045986 U

(43) Date of publication of application:
05.08.87 Bulletin 87/32

(84) Designated Contracting States:
DE ES FR GB IT

(71) Applicant: A. MAURI & F. S.r.l.
Via Dei Mille, 15
I-22062 Barzano' (Como)(IT)

(72) Inventor: Mauri, Giuseppe
Via Dei Mille, 13
I-22062 Barzano(IT)

(74) Representative: Martegani, Franco et al
Ingg. GUZZI e RAVIZZA S.r.l. Via Boccaccio,
24
I-20123 Milano(IT)

(54) Improved window wind mechanism, in particular for an automobile window.

(57) An improved window mechanism, in particular
for an automobile window, of a kind comprising, in
combination: a window support strip (16) sliding in a
first channel (10), to which strip (16) the window is
fixed, and a wind mechanism (15) operatively con-
nected to the said window support strip (16) throught
the intermediary of a flexible transmission element -
(18) which slides within a second channel (12). Said
second channel comprises a central run (12) from
the longitudinal edges (13) of which there extend
overhung, in a symmetrical manner, a pair of
tongues (14) constituting the said first channel (10),
the said central run (12) being directly connected to
the window wind mechanism (15).

## Fig.4

# IMPROVED WINDOW WIND MECHANISM, IN PARTICULAR FOR AN AUTOMOBILE WINDOW

Automobile window wind mechanisms in which the window is fixed in the region of its lower edge to a support strip which is controlled to slide along a metal channel mounted vertically in the automobile door structure are well-known to persons skilled in the art. The up or down movement is imparted to the window suppot strip through the intermediary of a wind mechanism -lever or power operated -which is also mounted within the door structure but generally in a position offset with respect to the aforesaid channel. The wind mechanism imparts movement to the window support strip by means of a wire rope, rack, link rods and similar means which are fixed to and apply their force to the window support strip at a point which is offset with respect to the window channel. Thus both during the upwards and the downwards movement of the support strip a moment sets in which tends to tilt the strip on one side; this tilting moment causes winding stiffness, calling for a certain degree of force on the part of the wind mechanism, and it also causes jamming and breakages.

The window support strip is also subjected to more than ordinary wear, which in turn causes excessive clearances and blacklash in the wind mechanism, adversely affecting its efficiency.

Moreover, when the kinematic connection between wind mechanism and window support strip is effected with a flexible element, provision must further be made parallel to the window channel for a channel for the said element, such channel being embodied in one piece in a profile which also comprises the window channel.

The said channel for the flexible transmission element, however, has at one of its ends to be connected by a curved section to the wind mechanism which, as stated, is mounted within the door structure at a certain distance from the metal profile. The said curved section of the connection is made of plastics material and is coupled to the metal profile by as many costly attachments, which calls for additional machining operations not only at the ends of the metal profile itself but in the region of the wind mechanism as well. For it is necessary to make an opening in the tube to permit the kinematic connection between the wind mechanism and the flexible element which transmits motion.

The general object of the present invention is to embody a window wind mechanism capable of eliminating the aforesaid drawbacks of the known art.

Another object of the invention is to embody a window wind mechanism which us very straightforward in structure, thus economically feasible, and easy to mount.

To attain the said objects the present invention embodies an improved window regulator device, particularly for regulating an automobile window, of a kind comprising, in combination: a window support strip sliding in a first channel, to which strip the window is fixed, and a wind mechanism operatively connected to said strip through the intermediary of a flexible transmission element sliding within a second channel, wherein the second channel comprises a central run from whose longitudinal edges there extend overhung, in a symmetrical manner, a pair of tongues constituting the said first channel, the said central run being directly connected to the wind mechanism.

The structural and functional characteristics of the invention, and its advantages over the known art, will become more apparent from an examination of the following description thereof, with reference to the attached diagrammatic drawings which illustrate an example of a window wind mechanism embodied according to the teachings of the invention.

In the drawings:

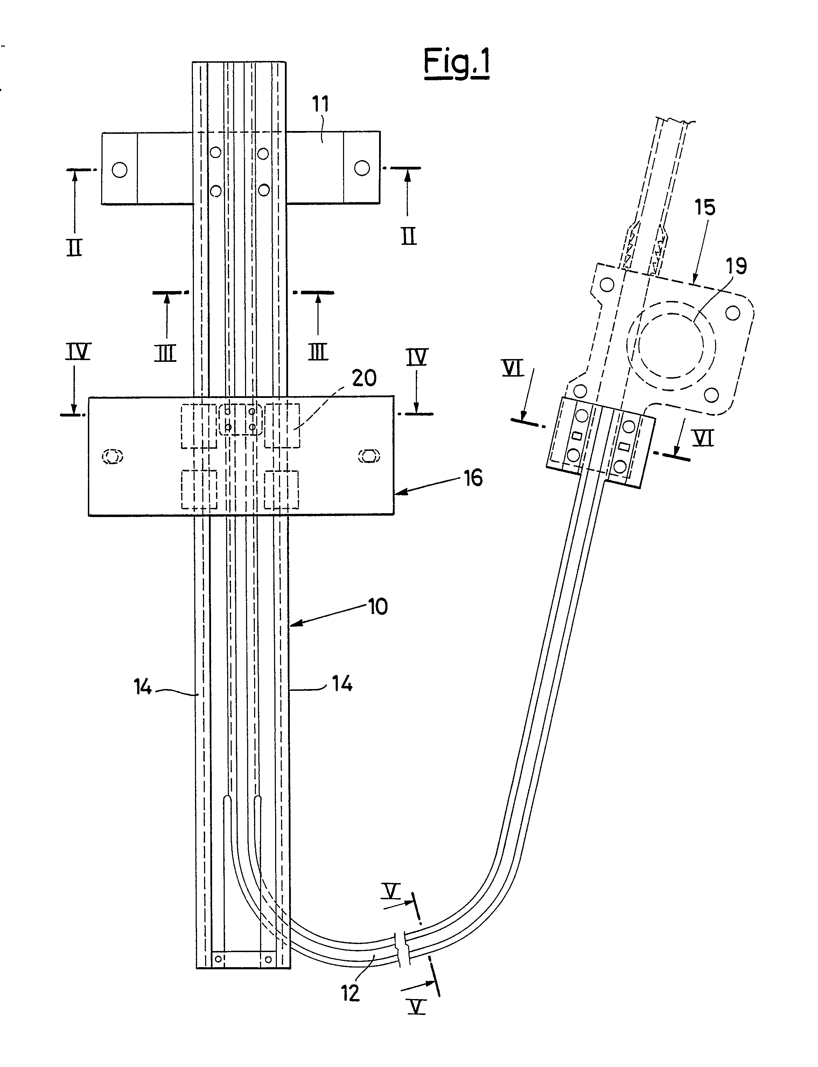

Figure 1 is a front elevation showing the window wind mechanism of the invention;

Figure 2 is a section on the line II-II of Figure 1;

Figure 3 is a section on the line III-III of Figure 1;

Figure 4 is a section on the line IV-IV of Figure 1;

Figure 5 is a section on the line V-V of Figure 1; and

Figure 6 is a section on the line VI-VI of Figure 1.

With reference to the drawings, the window wind mechanism according to the invention consists structurally of a metal profile indicated overall by 10, adapted to be fixed, by means of a U-bolt 11, to for example the internal structure of an automobile door.

According to the innovative principles of the invention, the profile 10 comprises a central run 12 with longitudinal edges 13 to which is fixed a pair of tongues 14.

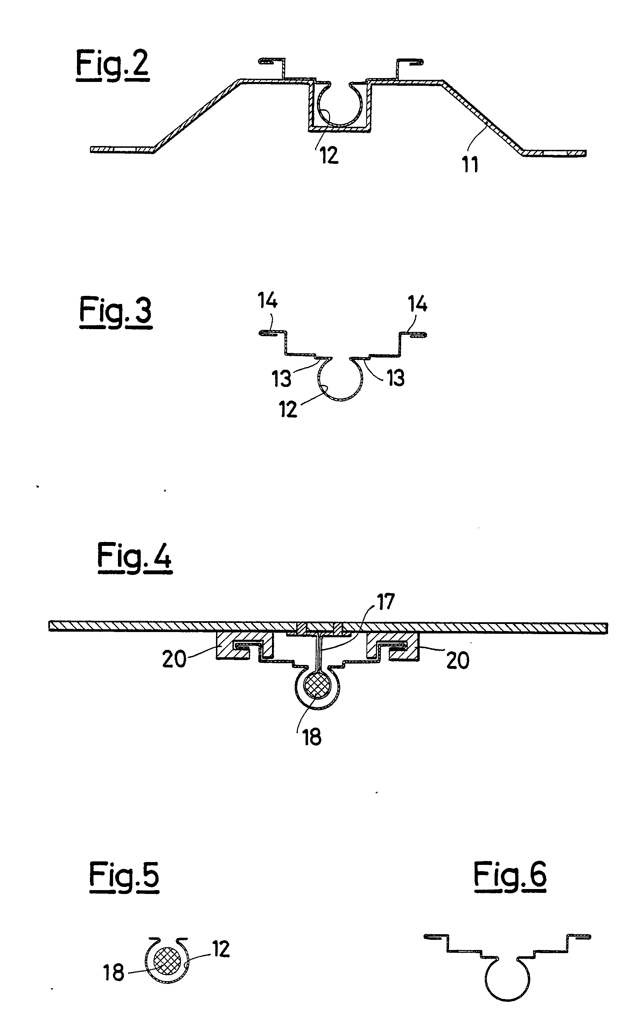

There is in this way obtained the wholly symmetrical run design shown in Figure 3.

At one end of the profile 10 the central run 12 can extend alone and be curved for connection to a wind mechanism indicated overall by 15, which can be of any known kind and is therefore not here illustrated in detail.

The numeral 16 indicates overall a window support strip to which the window is fixed in a known manner. The support strip 16 is in turn secured at 17 (Figure 4) to a flexible element 18, for example a rack element, which is guided within the central run 12 and to which motion is imparted by the wind mechanism 15, to such end provided with a pinion 19.

The window support strip 16 can thus be controlled to translate along the profile 10 and in its translation is positively guided by the pair of tongues 14 to which the support strip 16 is restrained by means of anti-friction retaining means 20.

The foregoing description shows how the translation of the window support strip 16 can be effected smoothly and without jibbing inasmuch as the force trasmitted to the support strip 16 through the intermediary of the flexible element 18 is applied along the axis of symmetry of the profile 10/support strip 16 complex.

It is also evident that the connection between the profile 10, which assures the guided ups or down movement of the window, and the wind mechanism 15, can be effected in an economical manner directly by the central run 12 itself, without any need for extra parts or additional machinings of the comples.

The profile can be of shapes different from that exemplified in the drawings, it being necessary only to form a central run for the flexible element and lateral channels disposed symmetrically within which the window support strip slides.

## Claims

An improved window mechanism, in particular for an automobile window, of a kind comprising, in combination: a window support strip sliding in a first channel, to which strip the window is fixed, and a wind mechanism operatively connected to the said window support strip throught the intermediary of a flexible transmission element which slides within a second channel, wherein the said second channel comprises a central run from the longitudinal edges of which there extend overhung, in a symmetrical manner, a pair of tongues constituting the said first channel, the said central run being directly connected to the window wind mechanism.

0 230 697

Fig.1

Fig.2

12    11

Fig.3

14    14
13    13
12

Fig.4

17
20    20
18

Fig.5    Fig.6

18    12

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 097 788 (METALLWERK MAX BROSE) <br> * Page 2, line 12 - page 3, line 3; figures 1,2,4 * | 1 | B 60 J 1/17 <br> E 05 F 11/48 |
| | --- | | |
| A | GB-A- 983 524 (GOLDE) <br> * Page 2, line 116 - page 3, line 26; figures 9-11 * | 1 | |
| | --- | | |
| A | DE-A-3 000 635 (ROCKWELL GOLDE) <br> * Page 12, lines 3-12; figure 1 * | 1 | |
| | ----- | | |

**TECHNICAL FIELDS SEARCHED (Int. Cl.4)**

B 60 J
E 05 F

The present search report has been drawn up for all claims

| Place of search | Date of completion of the search | Examiner |
|---|---|---|
| THE HAGUE | 23-04-1987 | AYITER I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82

European Patent Office